# FASCICULE DE BREVET EUROPEEN

(11) **EP 4 234 865 B1**
(45) Date de publication et mention de la délivrance du brevet: **21.08.2024**
(21) Numéro de dépôt: 23155714.1
(22) Date de dépôt: 09.02.2023
(51) Int. Cl.: E05C 21/00, B05B 13/02, B62D 65/06, E05C 17/08, E05C 17/12, B62D 65/02, E05B 63/04

(54) **DISPOSITIF DE MAINTIEN PROVISOIRE D'UN ÉLÉMENT OUVRANT À 90° PAR RAPPPORT À UN ÉLÉMENT FIXE**
VORRICHTUNG ZUR VORÜBERGEHENDEN HALTERUNG EINES ÖFFNUNGSELEMENTS MIT 90° GEGENÜBER EINEM FESTELEMENT
DEVICE FOR TEMPORARILY HOLDING A WING ELEMENT AT 90° WITH RESPECT TO A FIXED ELEMENT

(30) Priorité: 28.02.2022 FR 2201755
(43) Date de publication de la demande: 30.08.2023
(73) Titulaire: Stellantis Auto SAS, 78300 Poissy (FR)
(72) Inventeur: LUELMO, Emilio, 36209 Vigo - Pontevedra (ES); ASTORG, Alexandre, 91310 Linas (FR)

(56) Documents cités:
- EP-A1- 2 182 146
- GB-A- 1 187 345
- US-A- 1 379 959
- US-A- 2 035 944
- US-A1- 2009 045 654

## Description

### Domaine technique

La présente invention concerne le domaine des véhicules automobiles. L'invention concerne notamment le domaine de verrouillage provisoire des éléments ouvrants sur des éléments fixes des carrosseries des véhicules automobiles.

### Technique antérieure

Lors de l'assemblage des véhicules automobiles dans les chaînes de montage, chaque carrosserie reçoit un traitement spécial afin de la protéger de toute éventuelle corrosion, entre autres, et cela, en appliquant un ou plusieurs revêtements, tels que des revêtements de protection ou l'application d'une couche de peinture et de vernis.

À cet égard, un tel traitement est généralement reçu par la carrosserie préalablement à la fixation définitive d'un élément ouvrant du véhicule automobile, tel qu'une porte, un capot, ou un hayon, par exemple, sur un élément fixe de la carrosserie du véhicule automobile. En effet, lors de ces traitements, les éléments ouvrants ne sont pas encore équipés de dispositifs de verrouillage définitifs, tels que des serrures.

C'est la raison pour laquelle des dispositifs de verrouillage provisoire sont prévus, permettant ainsi le maintien de l'ouvrant dans une position ouverte ou demi-fermée par rapport à l'élément fixe auquel il sera fixé.

Il est connu de l'état de l'art d'utiliser des dispositifs de verrouillage provisoires qui sont généralement interposés entre l'ouvrant et la carrosserie. Toutefois, avec la robotisation croissante des lignes de production automobiles, les dispositifs de verrouillage actuels ne permettent pas d'assurer une automatisation complète des opérations traitements de carrosserie en ce qu'ils nécessitent une intervention humaine répétitive, notamment lors des traitements d'application des revêtements de protection dans lesquels il est parfois nécessaire de modifier la position d'ouverture de l'ouvrant afin de permettre au robot pulvérisateur d'atteindre toutes les surfaces de la carrosserie.

Le document de brevet publié FR 2 893 300 A1 divulgue un dispositif d'écartement provisoire d'un élément ouvrant sur un élément fixe d'une carrosserie. Cependant, la solution proposée par le document ne permet pas la manipulation de l'ouvrant par un bras robotisé.

De plus, le dispositif d'écartement du document FR 2 893 300 A1 n'est pas adaptée à tous les types d'ouvrant de véhicules automobiles tels que des véhicules utilitaires ayant des portes arrière.

Il est connu d'autres types de dispositifs d'écartements provisoires d'un élément ouvrant tels que divulgués par les documents US2009/0045654 A1 et EP2182146 A1.

Les solutions proposées dans l'état de l'art présent une marge d'amélioration et nécessitent une adaptation aux besoins accrus en robotisation des lignes de production actuelles des véhicules automobiles.

### Exposé de l'invention

La présente invention a pour objectif de pallier au moins un des inconvénients de l'état de la technique susmentionné. Plus particulièrement, l'invention a pour objectif de proposer un dispositif permettant le maintien provisoire d'un ouvrant de carrosserie de véhicule automobile en position d'ouverture.

À cet effet, l'invention a pour objet un dispositif pour un maintien provisoire d'un ouvrant de carrosserie de véhicule automobile conformément à l'objet de la revendication 1.

Selon un mode de réalisation, l'épaulement forme au moins une surface d'appui perpendiculaire à une direction générale du bras.

Selon un mode de réalisation, la direction générale du bras forme une courbe dans un plan, l'au moins une surface d'appui comprenant deux surfaces d'appui de part et d'autre dudit plan.

Selon un mode de réalisation, l'au moins un épaulement est à distance d'une extrémité distale du bras, de manière à ce qu'une portion distale dudit bras traverse l'ajour lorsque l'épaulement est en appui contre le bord dudit ajour.

Selon un mode de réalisation, l'articulation entre le bras et la platine de fixation permet une rotation suivant deux axes de rotation perpendiculaires. De préférence, les deux axes de rotation sont concourants, permettant de manière avantageuse, d'assurer l'articulation du bras dans un encombrement réduit.

Selon un mode de réalisation, la platine de fixation comprend un orifice de fixation à l'ouvrant et/ou un pion d'engagement dans ledit ouvrant.

L'invention a également pour objet un procédé d'assemblage d'un véhicule automobile, comprenant les étapes suivantes :
- ouverture d'un ouvrant de carrosserie du véhicule automobile en l'absence de tirant dudit ouvrant ;
- réalisation d'opérations d'assemblage suite à ladite ouverture ; et
- fermeture de l'ouvrant ;
remarquable en ce que l'étape d'ouverture comprend l'utilisation du dispositif de l'invention où la platine de fixation est fixée à l'ouvrant et l'épaulement est mis en appui contre un bord d'un ajour de la carrosserie.

Le dispositif de l'invention comprend, en outre, une platine d'appui configurée pour être en appui contre l'ajour, ladite platine d'appui comprenant au moins une ouverture formant le bord de l'ajour. À cet effet, l'épaulement est mis en appui contre un bord de l'au moins une ouverture.

Selon un mode de réalisation, l'étape de fermeture de l'ouvrant comprend un mouvement d'ouverture supplémentaire de l'ouvrant de manière à désengager le bras de l'ajour, suivi d'un mouvement de fermeture de l'ouvrant. Avantageusement, le dispositif de l'invention est configuré pour faciliter la réalisation d'opérations d'assemblage sur le véhicule automobile suite au maintien de l'ouvrant en position d'ouverture, ledit dispositif permet également de faciliter la manipulation de l'ouvrant par un bras robotisé.

### Brève description des dessins

[Fig 1] représente une vue en perspective d'un dispositif de maintien provisoire d'un ouvrant de carrosserie de véhicule automobile ;
[Fig 2] est une vue en perspective d'une partie avant d'une platine d'appui appartenant au dispositif de l'invention ;
[Fig 3] est une vue en perspective d'une partie arrière de la platine d'appui ;
[Fig 4] illustre schématiquement un ouvrant d'un véhicule automobile maintenu en position ouverte à 90° au moyen du dispositif de l'invention ;
[Fig 5] illustre schématiquement l'ouvrant en position ouverte à 120° et comprenant le dispositif de l'invention.

### Description détaillée

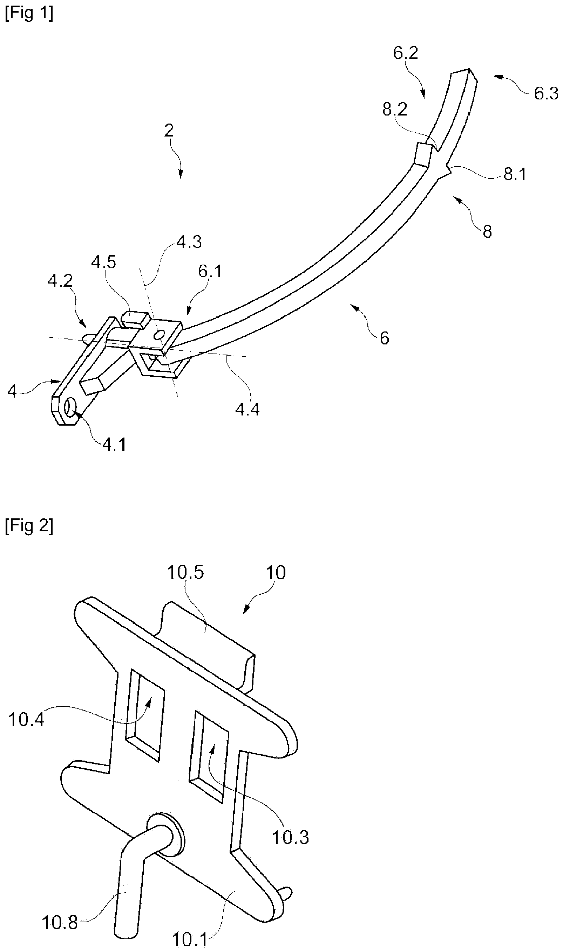

La figure 1 représente une vue en perspective d'un dispositif de maintien provisoire d'un ouvrant de carrosserie de véhicule automobile en position ouverte En référence à la figure 1, le dispositif comprend une platine de fixation 4 à partir de laquelle s'étend un bras 6. La platine de fixation 4 est configurée pour être fixée à l'ouvrant du véhicule automobile.

À cet égard, la platine de fixation 4 comprend préférentiellement un orifice 4.1 de fixation à l'ouvrant permettant ainsi le vissage de la platine de fixation 4 sur l'ouvrant. De préférence, la platine de fixation 4 comprend un pion 4.2 d'engagement dans l'ouvrant.

Avantageusement, le pion d'engagement 4.2 permet le centrage de la pièce de fixation 4 dans l'ouvrant préalablement au vissage, permettant ainsi une mise en positon facilitée et une répétabilité de fixation de la platine 4 sur les ouvrants des véhicules automobiles.

Le bras 6 comprend une partie proximale 6.1 articulée sur la platine de fixation 4 et présentant avec cette dernière une première articulation ayant un premier axe 4.3.

La platine de fixation 4 comprend une deuxième articulation avec le bras 6, cette dernière comprenant un deuxième axe 4.4. Préférentiellement, les premier 4.3 et deuxième axe 4.4 étant perpendiculaires.

Les première et deuxième articulations ne se limitent pas au seul exemple illustré dans la figure 1. En effet, lesdites articulations peuvent être assurées par une rotule par exemple ou par toute autre liaison mécanique comprenant deux axes de rotation ou plus.

Le bras 6 comprend une portion distale 6.2, ainsi qu'un épaulement 8 apte à venir en appui contre un bord d'un ajour dans la carrosserie. À cet effet, l'épaulement 8 est à distance de la platine de fixation 4, et notamment entre la partie distale 6.2 et ladite platine de fixation 4, et particulièrement, l'épaulement 8 est disposé entre une extrémité distale 6.3 et le premier axe 4.3.

Préférentiellement, l'épaulement 8 est distant de l'extrémité distale 6.3 d'une distance correspondant à environ 10% de la longueur totale du bras 6. Le terme environ correspond à ±5% de la valeur nominale.

La direction générale du bras 6 peut former une courbe dans un plan. En effet, le bras 6 comprend de préférence une forme arquée.

L'épaulement forme au moins une surface d'appui perpendiculaire à une direction générale du bras. Préférentiellement, l'au moins une surface d'appui comprenant deux surfaces d'appui 8.1 et 8.2 de part et d'autre du bras 6.

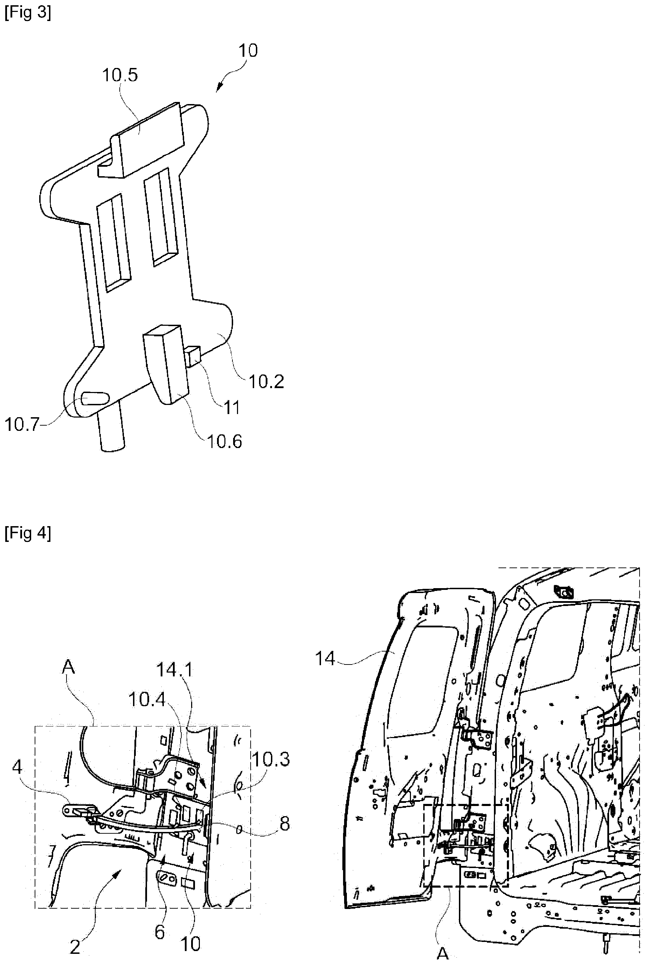

La figure 2 est une vue en perspective d'une partie avant 10.1 d'une platine d'appui 10 appartenant au dispositif de l'invention, et la figure 3 est une vue en perspective d'une partie arrière 10.2 de la platine d'appui 10.

En référence aux figures 2 et 3, le dispositif de l'invention comprend en outre la platine d'appui 10 configurée pour être en appui contre l'ajour de la carrosserie du véhicule.

Dans cette configuration, la platine d'appui 10 comprend au moins une ouverture formant le bord de l'ajour. Préférentiellement, la platine d'appui 10 comprend deux ouvertures 10.3 et 10.4.

La platine d'appui comprend au droit de sa partie arrière 10.2, respectivement à deux bords opposés correspondant à un bord supérieur et un bord inférieur, deux crochets 10.5 et 10.6 aptes à s'engager avec l'ajour afin de maintenir la platine d'appui 10 contre ledit ajour.

De préférence, la partie arrière 10.2 de la platine d'appui 10 comprend une bride 11 permettant la mise en position de ladite platine d'appui 10 sur la carrosserie du véhicule automobile préalablement à l'engagement du crochet 10.6 sur un bord fixe appartenant à la carrosserie et qui peut être adjacent de l'ajour.

Préférablement, la platine d'appui 10 comprend en outre un pion de centrage 10.7. Avantageusement, le pion de centrage 10.7 permet le centrage de la platine d'appui 10 dans la carrosserie du véhicule automobile, permettant ainsi une précision et une répétabilité du positionnement de la platine d'appui 10 sur l'élément fixe.

De préférence, la platine d'appui 10 comprend en outre sur sa partie avant 10.1, une poignée 10.8 permettant la manipulation manuelle de ladite platine d'appui 10 afin de faciliter le déplacement de cette dernière et sa réutilisation pour plusieurs carrosseries.

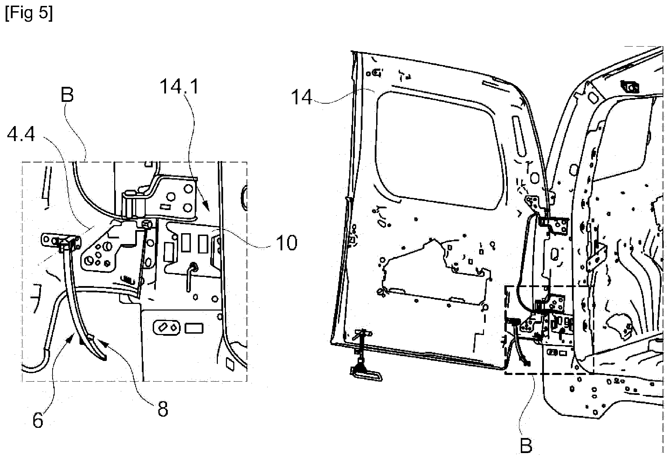

Les figures 4 et 5, illustrent de manière schématique l'ouvrant du véhicule automobile maintenu respectivement en position ouverte à 90° et à 120° au moyen du dispositif 2 de l'invention.

En référence à la figure 4, et particulièrement à la partie droite de la figure 4, dans laquelle l'ouvrant du véhicule est une porte arrière 14 d'un véhicule étant préférentiellement de type utilitaire et comprenant le dispositif 2 de l'invention.

La partie gauche de la figure 4 représente une portion agrandie A du dispositif 2, ce dernier est dans une position de maintien de l'ouvrant 14 à 90° par rapport à la carrosserie.

En référence à la portion agrandie A, la portion distale du bras 6 est engagée dans l'ouverture 10.3 de la platine d'appui 10 de manière à ce que la surface d'appui 8.1 de l'épaulement soit en contact avec le bord de l'ouverture 10.3. Dans cette configuration, la portion distale du bras 6 traverse l'ajour 14.1 de la carrosserie.

Il est à noter que le dispositif 2 de l'invention est utilisable et peut maintenir l'ouvrant 14 dans un côté droit ou gauche du véhicule. Dans la configuration illustrée dans la figure 4 et 5, l'ouvrant 14 se situe à gauche du véhicule automobile. De préférence, la portion distale du bras 6 est configurée pour s'engager dans l'ouverture 10.4 dans le cas où l'ouvrant 14 se situe à droite du véhicule automobile.

Le dispositif 2 de l'invention permet lors d'une position de maintien de l'ouvrant 14 illustrée à la figure 4, de pouvoir procéder à la réalisation d'opérations d'assemblage sur la carrosserie du véhicule automobile.

Préférentiellement, parmi les opérations d'assemblage, la carrosserie peut subir une application d'au moins un revêtement sur la carrosserie du véhicule automobile, par exemple, l'application d'une couche d'apprêt et/ou de peinture et/ou de vernis.

De façon avantageuse, l'utilisation du dispositif de l'invention permet de couvrir l'intégralité de la carrosserie lors des opérations d'application d'au moins un revêtement.

Avantageusement, le dispositif 2 peut être réutilisé plusieurs fois grâce à sa faculté de subir un traitement tel que le sablage par exemple.

En référence à la figure 5, l'ouvrant 14 est dans une position d'ouverture à 120° et dans laquelle la portion distale 6.2 du bras 6 est désengagée de l'ajour 14.1 et particulièrement désengagée de l'ouverture 10.3 de la platine d'appui 10.

La partie gauche de la figure 5 représente une portion agrandie B du dispositif 2, et dans laquelle le désengagement est illustré.

En effet, le désengagement peut survenir après un mouvement de poussée de l'ouvrant 14 vers l'extérieur afin d'agrandir l'angle de l'ouverture de ce dernier, un tel mouvement de poussée peut être assuré facilement par un bras robotisé.

À cet effet, la deuxième articulation permet au bras 6 de pivoter d'un angle de 90° autour du deuxième axe 4.4 sous l'effet de la gravité dès le désengagement du bras 6 par rapport à la platine d'appui 10.

Préférentiellement, la deuxième articulation du bras 6 comprend un limiteur d'angle 4.5 permettant de limiter la rotation dudit bras 6 à 90° juste après son désengagement.

Avantageusement, la rotation du bras 6 suite à son désengagement à 120°, permet de fermer complètement l'ouvrant 14, de manière à ce qu'une surface extérieure (non illustrée) de l'ouvrant 14 puisse être traitée, notamment lors d'un procédé d'application d'au moins un revêtement sur la carrosserie du véhicule automobile.

De manière avantageuse, la fermeture de l'ouvrant 14 peut être facilement assurée par le bras robotisé. À cet effet, le dispositif 2 de l'invention peut avantageusement rester fixé sur le véhicule automobile lors de la fermeture de l'ouvrant 14 sans abîmer la carrosserie dudit véhicule.

## Revendications

1. Dispositif (2) pour un maintien provisoire d'un ouvrant (14) de carrosserie de véhicule automobile, comprenant :
- une platine de fixation (4) ;
- un bras (6) s'étendant depuis la platine de fixation (4), le bras (6) étant articulé sur la platine de fixation (4) et comprenant à distance de ladite platine de fixation, un épaulement (8) apte à venir en appui contre un bord d'un ajour (14.1) dans la carrosserie ; et
- une platine d'appui (10) configurée pour être en appui contre l'ajour (14.1), avec au moins une ouverture (10.3, 10.4) formant le bord de l'ajour (14.1),
**caractérisé en ce que** la platine d'appui (10) comprend, respectivement à deux bords opposés, deux crochets (10.5, 10.6) aptes à s'engager avec l'ajour (14.1) afin de maintenir ladite platine d'appui (10) contre ledit ajour (14.1).

2. Dispositif (2) selon la revendication 1, dans lequel l'épaulement (8) forme au moins une surface d'appui (8.1, 8.2) perpendiculaire à une direction générale du bras (6).

3. Dispositif (2) selon la revendication 2, dans lequel la direction générale du bras (6) forme une courbe dans un plan, l'au moins une surface d'appui (8.1, 8.2) comprenant deux surfaces d'appui (8.1, 8.2) de part et d'autre dudit plan.

4. Dispositif (2) selon l'une des revendications 1 à 3, dans lequel l'épaulement (8) est à distance d'une extrémité distale (6.3) du bras (6), de manière à ce qu'une portion distale (6.2) dudit bras (6) traverse l'ajour (14.1) lorsque l'épaulement (8) est en appui contre le bord dudit ajour (14.1).

5. Dispositif (2) selon l'une des revendications 1 à 4, dans lequel l'articulation entre le bras (6) et la platine de fixation (4) permet une rotation suivant deux axes de rotation perpendiculaires.

6. Dispositif (2) selon l'une des revendications 1 à 5, dans lequel la platine de fixation (4) comprend un orifice (4.1) de fixation à l'ouvrant (14) et/ou un pion d'engagement (4.2) dans ledit ouvrant (14).

7. Procédé d'assemblage d'un véhicule automobile, comprenant les étapes suivantes :
- ouverture d'un ouvrant (14) de carrosserie du véhicule automobile en l'absence de tirant dudit ouvrant (14) ;
- réalisation d'opérations d'assemblage suite à ladite ouverture ; et
- fermeture de l'ouvrant ;
**caractérisé en ce que** l'étape d'ouverture comprend l'utilisation d'un dispositif (2) suivant l'une des revendications 1 à 6 où la platine de fixation (4) est fixée à l'ouvrant (14) et l'épaulement (8) est mis en appui contre un bord d'un ajour (14.1) de la carrosserie.

8. Procédé selon la revendication 7, dans lequel l'étape de fermeture de l'ouvrant (14) comprend un mouvement d'ouverture supplémentaire de l'ouvrant (14) de manière à désengager le bras (6) de l'ajour (14.1), suivi d'un mouvement de fermeture de l'ouvrant (14).

## Patentansprüche

1. Vorrichtung (2) zum zeitweiligen Halten einer Öffnung (14) einer Kraftfahrzeugkarosserie, umfassend:
- eine Befestigungsplatte (4);
- einen Arm (6), der sich von der Befestigungsplatte (4) erstreckt, wobei der Arm (6) an der Befestigungsplatte (4) angelenkt ist und in einem Abstand von der Befestigungsplatte eine Schulter (8) aufweist, die an einem Rand einer Öffnung (14.1) in der Karosserie anliegen kann, und
- eine Stützplatte (10), die zur Anlage an der Öffnung (14.1) ausgebildet ist, mit mindestens einer Öffnung (10.3, 10.4), die den Rand der Öffnung (14.1) bildet,
**dadurch gekennzeichnet, dass** die Trägerplatte (10) jeweils an zwei gegenüberliegenden Kanten zwei Haken (10.5, 10.6) aufweist, die in die Öffnung (14.1) eingreifen können, um die Trägerplatte (10) gegen die Öffnung (14.1) zu halten.

2. Vorrichtung (2) nach Anspruch 1, bei der die Schulter (8) eine mindestens eine Auflagefläche (8.1, 8.2) senkrecht zu einer allgemeinen Richtung des Arms (6) bildet.

3. Vorrichtung (2) nach Anspruch 2, bei der die allgemeine Richtung des Arms (6) eine Kurve in einer Ebene bildet, wobei die mindestens eine Auflagefläche (8.1, 8.2) zwei Auflageflächen (8.1, 8.2) auf jeder Seite der Ebene umfasst.

4. Vorrichtung (2) nach einem der Ansprüche 1 bis 3, bei der die Schulter (8) von einem distalen Ende (6.3) des Arms (6) beabstandet ist, sodass ein distaler Abschnitt (6.2) des Arms (6) durch die Öffnung (14.1) hindurchgeht, wenn die Schulter (8) an dem Rand der Öffnung (14.1) anliegt.

5. Vorrichtung (2) nach einem der Ansprüche 1 bis 4, bei der das Gelenk zwischen dem Arm (6) und der Befestigungsplatte (4) eine Drehung entlang zweier senkrechter Drehachsen ermöglicht.

6. Vorrichtung (2) nach einem der Ansprüche 1 bis 5, bei der die Befestigungsplatte (4) eine Öffnung (4.1) zum Befestigen am Öffnungsflügel (14) und/oder einen Stift (4.2) zum Eingriff in den Öffnungsflügel (14) aufweist.

7. Verfahren zur Montage eines Kraftfahrzeugs, das die folgenden Schritte umfasst:
- Öffnen einer Öffnung (14) der Karosserie des Kraftfahrzeugs bei Fehlen eines Ankers der Öffnung (14);
- die Durchführung von Montagevorgängen nach dem Öffnen und
- Verschluss des Öffnungsflügels;
**dadurch gekennzeichnet, dass** der Öffnungsschritt die Verwendung einer Vorrichtung (2) nach einem der Ansprüche 1 bis 6 umfasst, bei der die Befestigungsplatte (4) an dem Öffnungsblatt (14) befestigt ist und der Absatz (8) gegen einen Rand einer Öffnung (14.1) in der Karosserie gedrückt wird.

8. Verfahren nach Anspruch 7, bei dem der Schritt des Schließens des Öffnungsflügels (14) eine zusätzliche Öffnungsbewegung des Öffnungsflügels (14) umfasst, um den Arm (6) von der Öffnung (14.1) zu lösen, gefolgt von einer Schließbewegung des Öffnungsflügels (14).

## Claims

1. Device (2) for temporarily holding an opening (14) of a motor vehicle body, comprising:
- a fixing plate (4);
- an arm (6) extending from the fixing plate (4), the arm (6) being articulated on the fixing plate (4) and comprising, at a distance from said fixing plate, a shoulder (8) able to bear against an edge of an opening (14.1) in the bodywork; and
- a support plate (10) configured to bear against the opening (14.1), with at least one opening (10.3, 10.4) forming the edge of the opening (14.1),
**characterized in that** the support plate (10) comprises, respectively at two opposite edges, two hooks (10.5, 10.6) capable of engaging with the opening (14.1) in order to hold said support plate (10) against said opening (14.1).

2. Device (2) according to claim 1, in which the shoulder (8) forms a at least one bearing surface (8.1, 8.2) perpendicular to a general direction of the arm (6).

3. Device (2) according to claim 2, in which the general direction of the arm (6) forms a curve in a plane, the at least one bearing surface (8.1, 8.2) comprising two bearing surfaces (8.1, 8.2) on either side of the said plane.

4. Device (2) according to one of claims 1 to 3, in which the shoulder (8) is at a distance from a distal end (6.3) of the arm (6), so that a distal portion (6.2) of the said arm (6) passes through the opening (14.1) when the shoulder (8) is bearing against the edge of the said opening (14.1).

5. Device (2) according to one of claims 1 to 4, in which the articulation between the arm (6) and the fixing plate (4) allows rotation along two perpendicular axes of rotation.

6. Device (2) according to one of claims 1 to 5, in which the fixing plate (4) comprises an orifice (4.1) for fixing to the opening leaf (14) and/or a pin (4.2) for engagement in the said opening leaf (14).

7. Method of assembling a motor vehicle, comprising the following steps:
- opening of an opening (14) of the bodywork of the motor vehicle in the absence of a tie of said opening (14);
- carrying out assembly operations following the opening; and
- closure of the opening leaf;
**characterized in that** the opening step comprises the use of a device (2) according to one of claims 1 to 6, in which the fixing plate (4) is fixed to the opening leaf (14) and the shoulder (8) is pressed against an edge of an opening (14.1) in the bodywork.

8. Method according to claim 7, in which the step of closing the opening leaf (14) comprises an additional opening movement of the opening leaf (14) so as to disengage the arm (6) from the opening (14.1), followed by a closing movement of the opening leaf (14).
